# EUROPEAN PATENT APPLICATION

(11) **EP 2 487 645 A1**
(43) Date of publication of application: **15.08.2012**
(21) Application number: 11153900.3
(22) Date of filing: 09.02.2011
(51) Int. Cl.: G06T 5/50

(54) **Method of controlling the depth of field for a small sensor camera using an extension for EDOF**

(71) Applicant: Research In Motion Limited, Waterloo, ON N2L 3W8 (CA)
(72) Inventor: Bungariu, Calin Nicolaie, Irving, TX 75039 (US)
(74) Representative: Fennell, Gareth Charles

(57) **Abstract**

A system is provided for providing an adjustable depth of field in a photographic image. The system comprises a plurality of buffers, each configured to store an image associated with a different wavelength of light, each of the images having a different focal plane related to the associated wavelength. The system further comprises an algorithm configured to accept an input specifying the depth of field and a focal plane and further configured to produce a photograph with the specified depth of field and focal plane, wherein the algorithm applies the specified depth of field around the specified focal plane, the specified focal plane being associated with a focal plane of one of the images stored in one of the buffers.

## Description

### BACKGROUND

In the art of photography, it is well known that a photograph can sometimes have an appealing effect if the subject of the photograph is in focus while objects in the far background and near foreground are somewhat out of focus. The distance from a camera at which a subject is in sharpest focus can be referred to as the focal plane. The total distance in front and behind the focal plane in which objects are perceived to be in focus can be referred to as the depth of field. For example, if the subject is ten feet away from a camera with an adjustable lens, the photographer can adjust the focus on the lens so that objects ten feet away are in sharp focus. The focal plane would then be ten feet away. The photographer might also be able to adjust the lens and other properties of the camera such that objects just in front of and just behind the subject are also somewhat in focus. For example, objects up to one foot in front of the subject and up to two feet behind the subject might be kept in focus. The depth of field would then be three feet.

It is understood that there may be some subjective component to determining the size of the depth of field. That is, it is not necessarily the case that all objects within a given depth of field around a focal plane are definitively in focus and all objects outside that range are definitively out of focus. Rather, there may be a gradual blurring of objects on either side of the focal plane, with the blurring becoming more pronounced with greater distance from the focal plane. A photographer or a viewer of a photograph may make a subjective judgment regarding when an object is sufficiently blurred that the object could be considered to be outside the depth of field range around the focal plane.

Among the parameters that can be adjusted to achieve a desired depth of field at a given focal plane is the aperture of the camera lens. A large aperture number corresponds to a small lens opening, and a small aperture number corresponds to a large lens opening. With a small lens opening, a large number of objects throughout the field can be in focus. That is, when the lens opening is small, all objects from a point relatively near the camera to a point relatively far from the camera might be in focus. Therefore, when the aperture number is large, and the lens opening is correspondingly small, a large depth of field is obtained. Conversely, a small aperture number and large lens opening can create a narrow depth of field.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a focal plane for blue light.

Figure 2 illustrates a focal plane for green light.

Figure 3 illustrates a focal plane for red light.

Figure 4 illustrates a system that allows adjustment of a focal plane and depth of field for a photographic image captured by a fixed-lens camera, according to an implementation of the disclosure.

Figure 5 is a flowchart for a method for providing an adjustable focal plane for a photograph after data related to the photograph has been captured, according to an implementation of the disclosure.

Figure 6 illustrates a processor and related components suitable for implementing the present disclosure.

### DETAILED DESCRIPTION

It should be understood at the outset that although illustrative examples of one or more implementations of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with the full scope of equivalents.

Implementations of the present disclosure allow a focal plane and depth of field to be selected for a photograph taken on a camera that does not have an adjustable aperture. A photographer can specify a focal plane and depth of field after the camera has captured an image. An algorithm can then manipulate the raw data associated with the image to produce a photograph with the desired focal plane and depth of field.

Small "point and shoot" type digital cameras typically include a fixed lens that does not allow the user to adjust the lens aperture. Therefore, the user cannot control the focal plane or depth of field of a photograph taken with such a camera. The digital cameras that might be included in multi-function devices such as telephones, smart phones, personal digital assistants, handheld or laptop computers, and similar devices also typically lack this capability. All such cameras and all such devices that include such cameras will be referred to herein as fixed-lens cameras.

The lenses on fixed-lens cameras are typically quite small and have a correspondingly small lens opening. The depth of field for photographs taken with fixed-lens cameras can therefore be quite large. In a photograph taken with a typical fixed-lens camera, all objects in the range from two feet from the camera to infinity might be in focus. Since the size of the lens opening on such cameras typically cannot be adjusted, this depth of field cannot be changed. Therefore, a photograph of an object that is closer to a fixed-lens camera than about two feet might be out of focus.

A technique known as extended depth of field (EDOF) has been developed to allow the focus range of fixed-lens cameras to be extended. EDOF uses lenses that have a controlled longitudinal chromatic aberration due to the index of refraction of the lenses changing with respect to the wavelength of light. That is, with such lenses, longer wavelengths of light are refracted less than shorter wavelengths of light. For example, blue light might be refracted a great deal when passing through such a lens, red light might be only slightly refracted, and light with wavelengths between blue and red might be refracted by intermediate amounts.

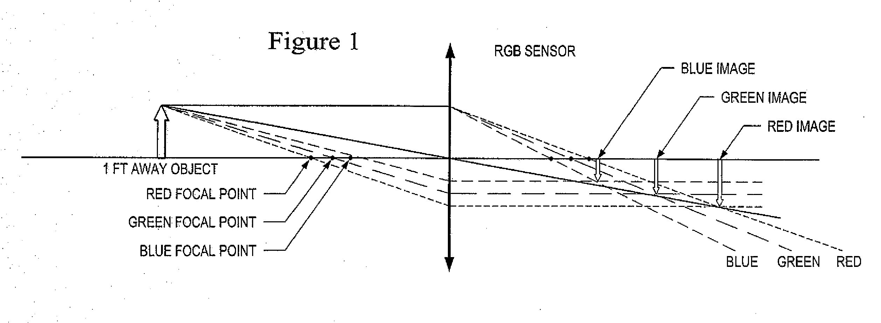

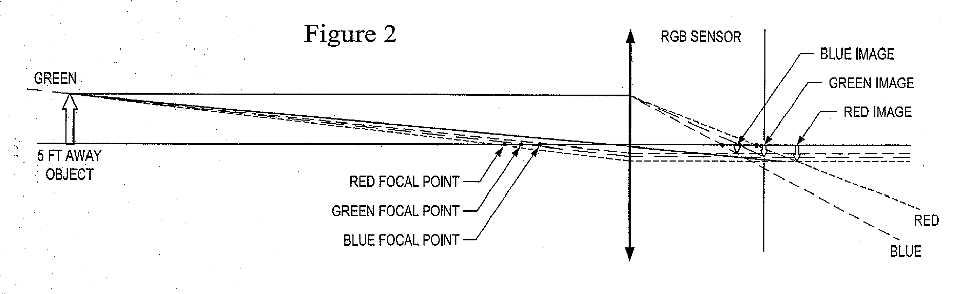

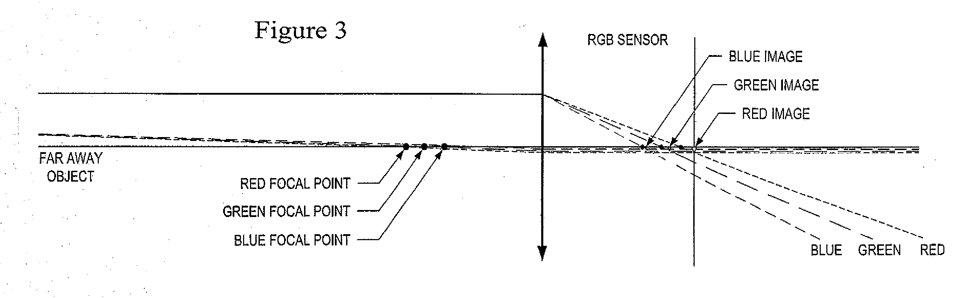

Each wavelength of light passing through such a lens might produce an image that is in focus at a distance from the lens that is different from the distance at which an image in a different wavelength might be in focus. As an example, blue light might correspond to a focal plane one foot away from the lens, as shown in Figure 1, green light might correspond to a focal plane five feet away from the lens, as shown in Figure 2, and red light might correspond to a focal plane far away from the camera, as shown in Figure 3. Therefore, a pure blue object will be in focus at one foot away from the lens, a pure green object will be in focus at five feet away from the lens, and a red object will be in focus when far away from the camera. It should be understood that the focal planes given here for different wavelengths of light are merely examples and that objects with these colors might be in focus at other distances.

An EDOF camera features a lens designed to control the longitudinal chromatic aberrations in a way that ensures at least one color channel of the image sensor contains in-focus information. For example, for a typical red/green/blue (RGB) sensor, a red image, a green image, and a blue image of a single object might be captured, and at least one will be in focus. A known algorithm is then used for each region of the image to identify the sharpest color channel. Then, for each region of the image, the algorithm transports the sharpness from the sharpest color to the other color channels. Finally, the sharpness-improved color channels are combined to form a final digital image with a depth of field greater than would otherwise be possible.

Implementations of the present disclosure for a Controllable Depth of Field (CDOF) can produce effects that extend beyond those of EDOF. Specifically, CDOF allows the depth of field for a fixed-lens camera to be increased or decreased. Increasing the depth of field is already covered by the EDOF technology. However, decreasing the depth of field, as provided with CDOF, has an effect of separating the picture subject from the background and foreground of the picture, a technique often used in portrait pictures to focus the viewer's attention on the picture subject. In addition to allowing control over the depth of field, the disclosure also provides a method of controlling the perceived location of the focal plane in the generated digital picture. A focusing capability is thereby provided to fixed-lens cameras that otherwise would not have an adjustable focus. As with the EDOF technology, the CDOF capability is achieved through the use of a lens with a controlled longitudinal chromatic aberration. A plurality of color channel data buffers captured through such a lens are saved and then made available to a user-controlled process for selection of a focal plane and depth of field. Algorithms similar to those used in EDOF can then be applied to the saved images to generate a photograph that has the desired focal plane and depth of field.

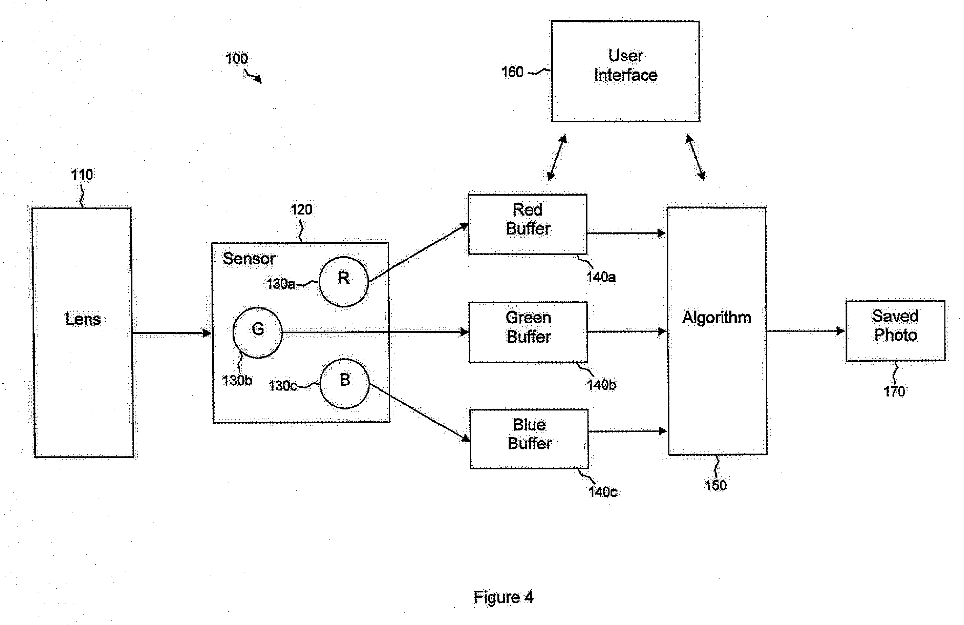

Figure 4 illustrates an implementation of a system 100 for specifying a focal plane and depth of field for a photograph after a photographic image has been captured. The system 100 might be implemented in a fixed-lens camera or in other types of cameras. Light from a desired photographic subject is allowed to enter a lens 110 that has a controlled longitudinal chromatic aberration. The lens 110 separates the incident light into a plurality of components with different wavelengths. The light emerging from the lens 110 enters a sensor 120 that includes a plurality of pixel elements 130. Each of the pixels 130 is configured to detect one of the constituent wavelengths of the incident light. In this example, there are three pixels 130, a red pixel 130a configured to detect light near the red portion of the spectrum, a green pixel 130b configured to detect light near the green portion of the spectrum, and a blue pixel 130c configured to detect light near the blue portion of the spectrum. In other implementations, other numbers of pixels 130 could be present and other portions of the visible spectrum could be detected. Each pixel color has a corresponding color channel buffer 140 associated with it.

Each of the pixels 130 sends to a corresponding color channel buffer 140 an image comprised of the constituent wavelength of light that that pixel 130 has been configured to detect. That is, the red pixel 130a sends an image that contains the red components of the incident light to a red channel buffer 140a, the green pixel 130b sends an image that contains the green components of the incident light to a green buffer channel 140b, and the blue pixel 130c sends an image that contains the blue components of the incident light to a blue channel buffer 140c. If a different number or type of pixels 130 were present in the sensor 120, a corresponding number or type of color channel buffers 140 would be present. Each color channel buffer 140 stores the image that it receives from the corresponding pixel 130. The images stored in the color channel buffers 140 can be referred to as raw images.

As described above, each raw image stored in one of the color channel buffers 140 has an individual depth of field contained within the extended depth of field range of the EDOF system. For example, the raw image stored in the blue channel buffer 140c might have a depth of field surrounding a focal plane one foot away from the lens 110; this can be seen as the macro range. The raw image stored in the green channel buffer 140b might have a depth of field surrounding a focal plane five feet away from the lens 110; this can be seen as the portrait range. The raw image stored in the red channel buffer 140a might have a depth of field covering the far end; this can be seen as the landscape range. In other implementations, the raw images might have different depth of field ranges. The raw images in the color channel buffers 140 are made available to an algorithm 150 that can generate a final digital image 170.

The algorithm 150 for the Controlled Depth of Field, CDOF, considers that a lens with the properly designed longitudinal chromatic aberration is used such that at least one color channel of the image sensor contains in-focus information. A consequence of this is that, due to the lack of simultaneous in-focus for all channels at the same time, chrominance high frequencies will be reduced. However, the human eye is less sensitive to the chrominance high frequency than to the luminance high frequency. In most natural images, light reflections, shadows, textures, illumination, shapes, object boundaries, and partial obstructions induce more luminance variation at lower scale than chrominance. Losing part of the chrominance high frequency does not have a large impact on the human eye perception of the picture. Therefore, the assumption that the color channels are highly correlated for most of the natural images can create redundancy in the color channels. This inherent characteristic of natural images is exploited by EDOF technology when the sharpness of the channel that is in focus is transported to the out-of-focus channels, effectively recovering information lost due to the blurring of the out-of-focus channels.

In an embodiment, the CDOF algorithm 150 uses the following steps to generate the final digital image 170: 1. Generate a depth map. 2. Transport the sharpness to all color channels. 3. Generate an EDOF digital image. 4. Save the EDOF image and the depth map. 5. Accept input from photographer regarding focus and depth of field. 6. Use the depth map to isolate the depth layer expected to be in focus. Optionally, the depth layer expected to be in focus can be further sharpened and the adjacent depth layers can be blurred. Blur increases with every layer away from the in-focus layer. 7. Finally, combine all the layers to create the final digital image 170.

The depth map generation assigns to each pixel of the final image 170 a depth value that represents the position of the object to which the pixel belongs within the EDOF of the camera. The depth map partitions the scene into three coarse depth layers that coincide with the depth of field for each color channel of an RGB sensor: blue/macro, green/portrait, and red/landscape. This is achieved by simply sorting the sharpness for each pixel in each color channel. The relative sharpness between channels can be computed based on the neighborhood of each pixel. Additional techniques can be used to add additional depth to the depth map.

The sharpness transport is performed at the pixel level and consists of copying the high frequencies of the sharpest color channel, as identified by the depth map, to the other color channels. Then, the final digital image 170 is obtained by combining the color channels. Based on the information from the depth map, the algorithm 150 puts every pixel in one of the depth layers.

In an embodiment, a user interface 160 can query the photographer for the desired focal plane and the desired depth of field. The focal plane selected via the user interface 160 maps to one of the depth layers. That depth layer is considered to be the in-focus layer. The algorithm 150 can optionally further sharpen the in-focus layer while it blurs the adjacent depth layers; blur increases with every layer away from the in-focus layer. As an example, if a coarse depth map is implemented and the macro depth layer is selected to be in focus, then the landscape depth layer is blurred more than the portrait depth layer. Finally, all the layers are combined to create the final digital image 170.

The user interface 160 allows a user to select the focal plane and to control the depth of field. While the user is moving through the various combinations, the algorithm 150 may provide previews of the possible final images. The photographer can use the user interface 160 to inform the algorithm 150 of the selection of the focal plane and depth of field. The algorithm 150 can then generate the final digital image 170. The digital image 170 can then be saved in any known image file format.

As an example, a photographer might use a camera that includes the system 100 to capture an image. The image and the depth map would then be stored. At a later time, the photographer might use the user interface 160 and the algorithm 150 to preview the effect of the selected focus and depth of field and, if the user elects, to generate the final photograph 170. That is, prior to taking a photograph, the photographer might be aware of the distance to a desired focal plane and a desired depth of field for the planned photograph. After taking the photograph, the photographer might use the user interface 160 to inform the algorithm 150 to generate and save a photograph 170 with the desired parameters.

For instance, if the photographer wished to take a portrait, the photographer might point the camera at the portrait subject and take a photograph. At a later time, the photographer might instruct the algorithm 150 to generate a final digital image 170 based on the green/portrait depth layer. The algorithm 150 would then use the techniques described above to create a final digital image 170 with a focal plane at approximately five feet. Alternatively, the photographer might specify the desired focal plane and depth of field before the photograph is taken, and the algorithm 150 might create the final digital image 170 at approximately the time the image is captured.

In the example of Figure 4, an RGB sensor is used featuring three pixel colors 130. If a greater number of pixels 130 were present, the depth map would have more depth layers. For example, if seven pixel elements 130 were present in the sensor 120, the photographer would be able to choose between seven different focal planes for the saved photograph 170.

The size of the depth of field around the selected focal plane can be adjusted using known techniques available to the algorithm 150. It can be seen that selecting the widest possible depth of field results in a situation similar to that of traditional EDOF. That is, if the photographer chooses not to narrow the depth of field, the field of focus will extend from four inches, for example, to infinity, as is the case with EDOF.

While the above discussion has focused on an implementation in a fixed-lens camera, these concepts could also be implemented on any digital camera that has a lens with a controlled longitudinal chromatic aberration and that has the proper processing algorithm. These concepts may not be quite as useful on a camera with a lens with an adjustable focus because the user would typically know the desired focal plane and depth of field before taking a photograph and would be able to set the focus parameters accordingly. However, these concepts might still provide some advantages to such cameras. For example, a camera that accepts interchangeable lenses might be capable of accepting a lens with a controlled longitudinal chromatic aberration and might also be provided with an algorithm as described above. Such a camera might allow a photographer to take a photograph without taking the time to set the focus. The photographer could then choose a proper focus at a later time. The likelihood of the photographer missing a noteworthy event while adjusting the focus could thus be reduced.

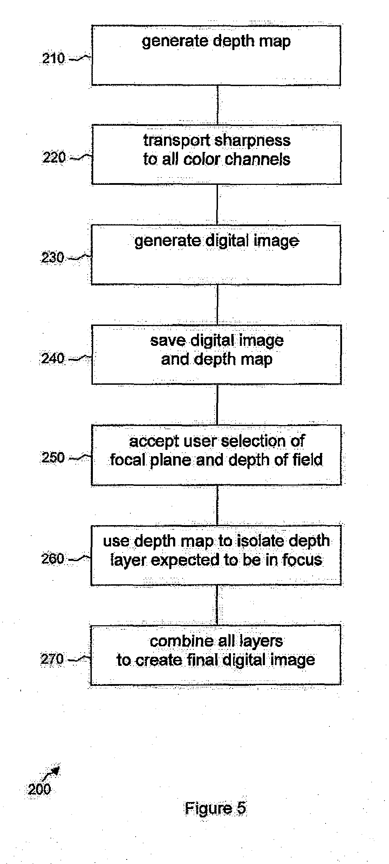

Figure 5 illustrates an implementation of a method 200 for providing an adjustable a focal plane for a photographic image after the photographic image has been captured. At block 210, a depth map is generated. At block 220, sharpness is transported to all color channels. At block 230, a digital image is generated. At block 240, the digital image and depth map are saved. At block 250, a user selection of a focal plane and depth of field is accepted. At block 260, the depth map is used to isolate the depth layer expected to be in focus. At block 270, all the layers are combined to create the final digital image.

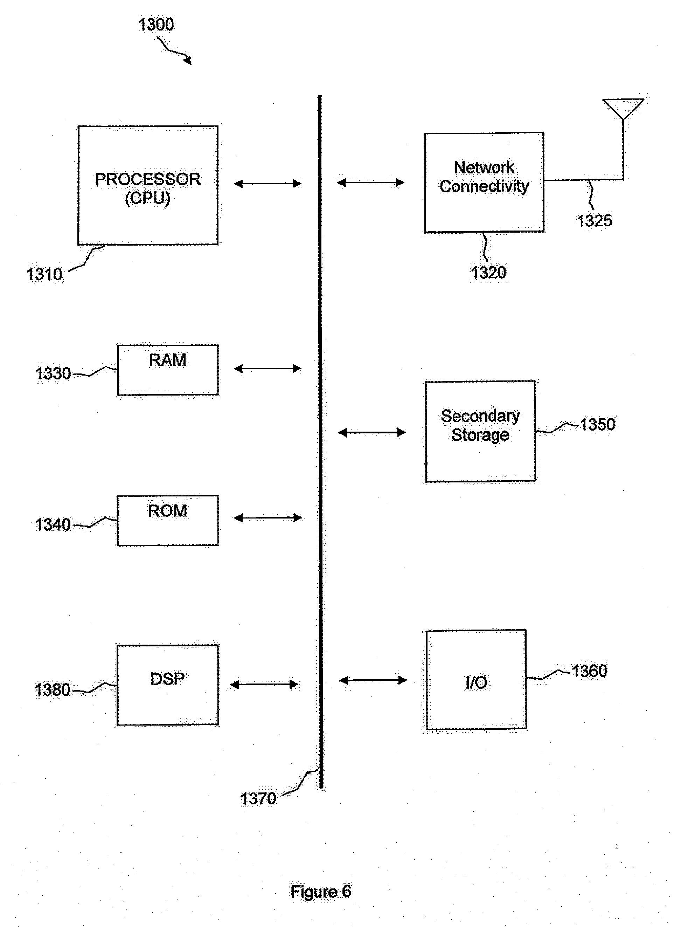

The components described above might include or be implemented by a processing component that is capable of executing instructions related to the actions described above. Figure 6 illustrates an example of a system 1300 that includes a processing component 1310 suitable for one or more of the implementations disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an implementation, a system is provided for providing an adjustable depth of field in a photographic image. The system comprises a plurality of buffers, each configured to store an image associated with a different wavelength of light, each of the images having a different focal plane related to the associated wavelength. The system further comprises an algorithm configured to accept an input specifying the depth of field and a focal plane and further configured to produce a photograph with the specified depth of field and focal plane, wherein the algorithm applies the specified depth of field around the specified focal plane, the specified focal plane being associated with a focal plane of one of the images stored in one of the buffers.

In another implementation, a method is provided for providing an adjustable a focal plane for a photographic image after the photographic image has been captured. The method includes generating a depth map, transporting sharpness to all color channels, generating a digital image, saving the digital image and the depth map, accepting a user selection of a focal plane and a depth of field, using the depth map to isolate a depth layer expected to be in focus, and combining all the layers to create a final digital image.

In another implementation, a fixed-lens camera is provided that allows adjustment of a focal plane and depth of field in a photographic image captured by the fixed-lens camera. The camera comprises a lens having a controlled longitudinal chromatic aberration; a plurality of pixel elements, each configured to detect a different wavelength of light emerging from the lens; a plurality of buffers, each configured to receive and store an image produced by one of the pixel elements; and an algorithm configured to accept an input specifying the focal plane and depth of field and further configured to produce a photograph with the specified focal plane and depth of field.

While several implementations have been provided in the present disclosure, it should be understood that the disclosed systems and methods may be implemented in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A system for providing an adjustable depth of field in a photographic image, comprising:
a plurality of buffers, each configured to store an image associated with a different wavelength of light, each of the images having a different focal plane related to the associated wavelength; and
an algorithm configured to accept an input specifying the depth of field and a focal plane and further configured to produce a photograph with the specified depth of field and focal plane, wherein the algorithm applies the specified depth of field around the specified focal plane, the specified focal plane being associated with a focal plane of one of the images stored in one of the buffers.

2. The system of claim 1, wherein each of the plurality of buffers receives a respective image from one of a plurality of pixel elements, each of the pixel elements configured to detect a different wavelength of light.

3. The system of claim 2, wherein the different wavelengths of light detected by each of the pixel elements are produced by a lens having a controlled longitudinal chromatic aberration.

4. The system of claim 1, wherein the algorithm produces proper colors in the photograph by using at least one color from an image stored in at least one buffer other than the buffer associated with the specified focal plane.

5. The system of claim 4, wherein the algorithm produces the proper colors using at least one technique that is used in an extended depth of field procedure.

6. The system of claim 5, wherein the specified depth of field is smaller than a depth of field that can be achieved with the extended depth of field procedure.

7. The system of claim 1, further comprising a user interface configured to accept the input specifying the depth of field and focal plane and to provide the input to the algorithm.

8. The system of claim 1, wherein the system is implemented in a fixed-lens camera.

9. A method for providing an adjustable focal plane for a photographic image after the photographic image has been captured, comprising:
generating a depth map;
transporting sharpness to all color channels;
generating a digital image;
saving the digital image and the depth map;
accepting a user selection of a focal plane and a depth of field;
using the depth map to isolate a depth layer expected to be in focus; and
combining all the layers to create a final digital image.

10. The method of claim 9, wherein generating the depth map comprises:
assigning to each pixel of the final digital image a depth value that represents the position of the object to which the pixel belongs within the depth of field of the camera;
the depth map partitioning a scene into coarse depth layers that coincide with a depth of field for each color channel of a sensor by sorting the sharpness for each pixel in each color channel; and
computing the relative sharpness between channels based on the neighborhood of each pixel.

11. The method of claim 9, wherein transporting the sharpness to all color channels is performed at the pixel level and comprises:
copying the high frequencies of the sharpest color channel, as identified by the depth map, to the other color channels;
obtaining the final digital image by combining the color channels; and
based on the information from the depth map, putting every pixel in one of the depth layers.

12. The method of claim 9, wherein the method is implemented in a fixed-lens camera.

13. A computer readable medium containing instructions that when executed by a processor perform the method of any of claims 9-11.

14. A fixed-lens camera that allows adjustment of a focal plane and depth of field in a photographic image captured by the fixed-lens camera, comprising:
a lens having a controlled longitudinal chromatic aberration;
a plurality of pixel elements, each configured to detect a different wavelength of light emerging from the lens;
a plurality of buffers, each configured to receive and store an image produced by one of the pixel elements; and
an algorithm configured to accept an input specifying the focal plane and depth of field and further configured to produce a photograph with the specified focal plane and depth of field.

15. The camera of claim 14, wherein the specified focal plane is associated with a focal plane of one of the images stored in one of the buffers and optionally further comprising a user interface configured to accept the input specifying the focal plane and depth of field and provide the input to the algorithm.
